# FASCICULE DE BREVET EUROPEEN

(11) **EP 0 748 926 B1**
(45) Date de publication et mention de la délivrance du brevet: **10.10.2001**
(21) Numéro de dépôt: 96401206.6
(22) Date de dépôt: 06.06.1996
(51) Int. Cl.: F01L 1/02, F01L 1/34, F16D 1/12

(54) **Dispositif d'accouplement et de fixation d'un pignon à l'extrémité d'un arbre**
Vorrichtung zur Kupplung und Befestigung eines Zahnrades an einem Ende eines Schaftes
Arrangement for connecting and fastening a sprocket to the extremity of a shaft

(30) Priorité: 13.06.1995 FR 9506969
(43) Date de publication de la demande: 18.12.1996
(73) Titulaire: AUTOMOBILES PEUGEOT, 75116 Paris (FR); AUTOMOBILES CITROEN, 92200 Neuilly-sur-Seine (FR)
(72) Inventeur: Destremont, Alain, 57000 Metz (FR)
(74) Mandataire: Gendraud, Pierre

(56) Documents cités:
- EP-A- 0 429 377
- FR-A- 2 621 367
- GB-A- 1 134 250
- GB-A- 1 336 226
- US-A- 3 734 073

## Description

L'invention est relative à un dispositif d'accouplement et de fixation d'un pignon à l'extrémité d'un arbre.

Elle se rapporte plus particulièrement aux pignons de distribution de moteurs à combustion interne, fixés sur un arbre tel qu'un arbre à cames pour l'entraîner au moyen d'une chaîne ou d'une courroie crantée coopérant avec les dents du pignon.

Le calage angulaire entre l'arbre et le pignon étant généralement assuré par un moyen d'accouplement usuel tel qu'une clavette, il est souhaitable d'associer à ce moyen un agencement permettant un léger réglage du calage angulaire, réglage correspondant à un angle inférieur à celui d'un intervalle entre deux dents du pignon, afin d'assurer lors de la fixation de celui-ci sur l'arbre une correcte répartition de la tension de la courroie ou de la chaîne.

A cet effet, il s'avère avantageux d'interposer entre l'arbre et le pignon une pièce intermédiaire calée sur l'arbre par un moyen d'accouplement sans jeu et reliée au pignon par -un agencement permettant le réglage angulaire susmentionné. On connait un dispositif de ce type dans lequel la pièce intermédiaire, interposée axialement entre le pignon et l'extrémité de l'arbre, est fixée à celui-ci par une vis axiale et au pignon par trois vis parallèles à l'axe et traversant chacune le pignon par une lumière permettant le réglage angulaire susmentionné.

Le document EP-A-0 429 377 montre un tel dispositif.

Ce dispositif s'avère relativement coûteux et long à mettre en place à cause des quatre vis qu'il comporte.

L'invention vise à réaliser plus simplement un dispositif du même type c'est-à-dire avec une pièce intermédiaire interposée entre l'arbre et le pignon. Selon l'invention, la pièce intermédiaire est une plaque interposée entre une face d'extrémité de l'arbre et un flasque central du pignon, et munie d'un bras radial engagé dans une encoche du pignon avec un jeu permettant le réglage du calage angulaire, tandis que la vis axiale traverse la plaque et le flasque de manière à assurer la fixation du pignon sur l'arbre.

Selon quelques caractéristiques intéressantes de l'invention :
- une partie principale de la plaque est de forme circulaire et engagée dans un évidement cylindrique axial du pignon, et son bras traverse une encoche agencée dans une partie du pignon formant moyeu et délimitant avec le flasque central l'évidement cylindrique ;
- la portion extrême de l'arbre juxtaposée à la plaque présente la même dimension radiale que la partie circulaire de celle-ci et est aussi engagée dans l'évidement cylindrique du moyeu ;
- la plaque comporte une saillie tournée vers l'arbre et engagée dans une rainure pratiquée dans la face d'extrémité de ce dernier, de manière à constituer un moyen d'accouplement sans jeu entre l'arbre et la plaque ;
- une lumière est agencée à l'extrémité du bras pour permettre un repérage de position angulaire de l'arbre par rapport à un organe fixe portant ce dernier.

Un mode de réalisation d'un dispositif d'accouplement et de fixation selon l'invention est décrit ci-après, avec référence aux dessins annexés parmi lesquels :

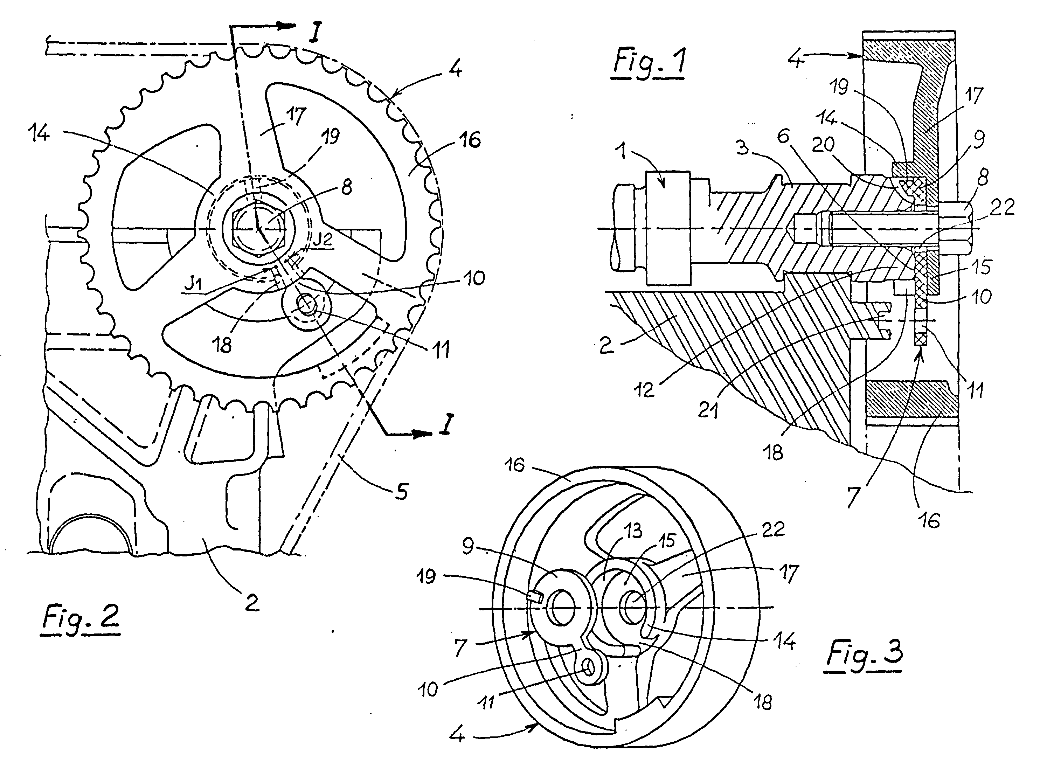

- la figure 1 est une vue en coupe axiale, suivant la ligne I-I de la figure 2, d'un pignon accouplé et fixé à un arbre ;
- la figure 2 est une vue de droite par rapport à la figure 1 ;
- la figure 3 est une vue simplifiée en perspective de deux pièces du dispositif avant leur assemblage.

On voit sur les figures un arbre à cames 1 porté par une culasse 2 d'un moteur à combustion et destiné à être fixé sur elle par des chapeaux de palier (non représentés) au droit de tourillons 3 dont un seul est visible ici.

Un pignon 4 -ou roue dentée- destiné à coopérer avec une courroie crantée 5 est fixé contre une face d'extrémité 6 de l'arbre 1, avec interposition axiale d'une pièce intermédiaire 7, par une vis 8 coopérant avec un trou taraudé axial de l'arbre.

La pièce intermédiaire 7 est constituée d'une plaque en matériau de forte adhérence de manière à contribuer à la solidarisation en rotation entre cette pièce et le pignon après serrage de la vis 8. Cette pièce 7 comporte une partie principale 9 de forme circulaire et un bras radial 10 dont l'extrémité est munie d'une lumière 11.

Le diamètre de la partie circulaire 9 est le même que celui de l'extrémité adjacente 12 de l'arbre, de sorte que cette partie 9 et cette extrémité 12 sont engagées par emmanchement juste dans un même évidement axial cylindrique 13 pratiqué dans un moyeu 14 du pignon, cet évidement étant borgne car délimité axialement par un fond formant flasque central 15 pour le pignon. Ce flasque est relié à la périphérie crantée 16 du pignon par trois larges rayons 17 et percé d'un trou central 22 apte à recevoir la tige de la vis 8.

La partie du moyeu 14 délimitant radialement l'évidement 13 est échancrée par une encoche 18 que traverse avec jeu J1+J2 le bras 10 de la plaque 7.

La plaque 7 comporte un ergot 19 formant saillie tournée vers l'arbre 1 et engagée sans jeu dans une rainure 20 pratiquée dans la portion extrême 12 de ce dernier et débouchant dans la face 6.

Lors du montage du pignon 4 et de la courroie crantée 5 sur l'arbre 1, la plaque 7 est engagée dans le moyeu 14 par emmanchement de sa partie circulaire 7 dans l'évidement 13, le bras 10 étant placé dans l'encoche 18 ; puis l'ensemble pignon 4 et plaque 7 est approché de la face 6 de l'arbre et, alignant l'ergot 19 de la plaque avec la rainure 20 de l'arbre, l'extrémité 12 de celui-ci est engagée dans l'évidement 13 du pignon, celui-ci et la plaque étant poussés vers l'arbre et maintenus axialement par la vis 8 ; l'arbre est alors tourné de manière à placer la lumière 11 de la plaque 7 au droit d'un trou de repère 21 de la culasse, à l'aide d'une pige usuelle non représentée.

L'arbre étant ainsi calé, c'est-à-dire immobilisé en rotation dans une position angulaire adaptée à celle du vilebrequin du moteur, la tension de la courroie est réalisée, et une répartition correcte de cette tension de part et d'autre du pignon est obtenue par un léger réglage angulaire entre celui-ci et l'arbre, réglage possible grâce au jeu J1+J2 entre le bras 10 de la plaque et l'encoche 18 du moyeu. La vis 8 est alors serrée de façon à assurer le blocage du pignon sur l'arbre.

L'opération d'assemblage s'avère ainsi très rapide, et le dispositif présente une simplicité qui lui procure un faible poids, un encombrement minimal, un bas prix de revient et une bonne fiabilité.

## Revendications

1. Dispositif d'accouplement et de fixation d'un pignon (4) à l'extrémité d'un arbre (1), comportant une pièce intermédiaire (7) interposée axialement entre le pignon et l'arbre, calée angulairement sur celui-ci par un moyen d'accouplement sans jeu, reliée au pignon par un agencement permettant un réglage du calage angulaire de celui-ci, et fixée à l'arbre par une vis axiale (8),
la pièce intermédiaire étant une plaque (7) interposée entre une face d'extrémité (6) de l'arbre et un flasque central (15) du pignon, **caractérisé en ce que** cette plaque (7) est munie d'un bras radial (10) engagé dans une encoche (18) du pignon avec un jeu (J1,J2) permettant le réglage du calage angulaire du pignon, tandis que la vis axiale (8) traverse la plaque (7) et le flasque (15) de manière à assurer la fixation du pignon (4) sur l'arbre.

2. Dispositif selon la revendication 1, **caractérisé en ce qu'**une partie principale (9) de la plaque (7) est de forme circulaire et engagée dans un évidement cylindrique axial (13) du pignon, et son bras (10) traverse une encoche (18) agencée dans une partie du pignon formant moyeu (14) et délimitant avec le flasque central (15) l'évidement cylindrique (13) ;

3. Dispositif selon la revendication 2, **caractérisé en ce que** la portion extrême (12) de l'arbre juxtaposée à la plaque (7) présente la même dimension radiale que la partie circulaire (9) de celle-ci et est aussi engagée dans l'évidement cylindrique (13) du moyeu ;

4. Dispositif selon l'une des revendications 1 à 3, **caractérisé en ce que** la plaque (7) comporte une saillie (19) tournée vers l'arbre et engagée dans une rainure (20) pratiquée dans la face d'extrémité (6) de ce dernier, de manière à constituer un moyen d'accouplement sans jeu entre l'arbre et la plaque ;

5. Dispositif selon l'une des revendications 1 à 4, **caractérisé en ce qu'**une lumière (11) est agencée à l'extrémité du bras (10) pour permettre un repérage de position angulaire de l'arbre (1) par rapport à un organe fixe (2) portant ce dernier.

## Claims

1. Device for the coupling and fixing of a pinion (4) to the end of a shaft (1), comprising an intermediate part (7) interposed axially between the pinion and the shaft, locked angularly on said shaft by coupling means with no play, connected to the pinion by an arrangement permitting adjustment of the angular locking thereof, and fixed to the shaft by an axial screw (8),
the intermediate part being a plate (7) interposed between an end face (6) of the shaft and a central flange (15) of the pinion, **characterised in that** this plate (7) is provided with a radial arm (10) engaged in a notch (18) of the pinion with play (J1, J2) permitting the adjustment of the angular locking of the pinion, whilst the axial screw (8) passes through the plate (7) and the flange (15) so as to ensure that the pinion (4) is fixed to the shaft.

2. Device according to Claim 1, **characterised in that** a main portion (9) of the plate (7) is circular in shape and is engaged in an axial cylindrical recess (13) of the pinion, and its arm (10) passes through a notch (18) arranged in a portion of the pinion forming a hub (14) and, together with the central flange (15), delimiting the cylindrical recess (13).

3. Device according to Claim 2, **characterised in that** the furthermost portion (12) of the shaft juxtaposed on the plate (7) has the same radial dimension as the circular portion (9) thereof and is also engaged in the cylindrical recess (13) of the hub.

4. Device according to one of Claims 1 to 3, **characterised in that** the plate (7) has a projection (19) facing the shaft and engaged in a slot (20) made in the end face (6) of the latter, so as to constitute a coupling means with no play between the shaft and the plate.

5. Device according to one of Claims 1 to 4, **characterised in that** an aperture (11) is arranged at the end of the arm (10) so as to make it possible to locate the angular position of the shaft (1) with respect to a fixed unit (2) carrying the latter.

## Patentansprüche

1. Vorrichtung zum Ankoppeln und Befestigen eines Ritzels (4) am Ende einer Welle (1), die zwischen der Welle und dem Ritzel ein Zwischenstück umfasst, das mittels einer Kupplungsvorrichtung ohne Spiel winklig an der Welle verkeilt und mit dem Ritzel durch eine Anordnung verbunden ist, welche dessen Winkeleinstellung erlaubt, und das an der Welle mittels einer Axialschraube (8) befestigt ist, wobei das Zwischenstück eine Scheibe (7) ist, die zwischen einer Endseite (6) der Welle und
einem mittig angeordneten Flansch (15) des Ritzels vorgesehen ist,
**dadurch gekennzeichnet, dass** diese Scheibe (7) mit einem Radialarm (10) versehen ist, der in einen Kerbschnitt (18) des Ritzels mit einem Spiel (J1, J2) eingreift, das die Einstellung der Winkelverkeilung des Ritzels erlaubt, während die Axialschraube (8) durch die Scheibe (7) und den Flansch (15) geführt ist und so die Befestigung des Ritzels (4) an der Welle sicherstellt.

2. Vorrichtung nach Anspruch 1, **dadurch gekennzeichnet, dass** ein wesentlicher Teil (9) der Scheibe (7) eine kreisrunde Form hat und in eine zylindrische axiale Aussparung (13) des Ritzels eingreift und ist ihr Arm (10) durch einen Kerbschnitt (18) geführt, der in einem Teil des Ritzels vorgesehen ist, der eine Nabe (14) bildet und mit dem mittig angeordneten Flansch(15) die zylindrische Aussparung (13) bildet.

3. Vorrichtung nach Anspruch 2, **dadurch gekennzeichnet, dass** der äußere Bereich (12) der Welle, der neben der Scheibe liegt (7), die gleiche radiale Abmessung aufweist wie deren kreisförmiger Teil (9) und ebenfalls in die zylindrische Aussparung (13) der Nabe eingreift.

4. Vorrichtung nach einem der Ansprüche 1 bis 3, **dadurch gekennzeichnet, dass** die Scheibe (7) einen zur Welle weisenden Vorsprung (19) aufweist, der in eine erste Nut (20) eingreift, die in deren Endseite (6) in der Weise vorgesehen ist, dass er eine Ankuppelvorrichtung ohne Spiel zwischen der Welle und der Scheibe bildet.

5. Vorrichtung nach einem der Ansprüche 1 bis 4, **dadurch gekennzeichnet, dass** am Ende des Arms (10) zur Feststellung der Winkelposition der Welle (1) bezüglich einer festen Vorrichtung (2), welche diese trägt, eine Öffnung (11) vorgesehen ist.
